# EUROPEAN PATENT SPECIFICATION

(11) **EP 1 308 405 B1**
(45) Date of publication and mention of the grant of the patent: **07.01.2004**
(21) Application number: 01830669.6
(22) Date of filing: 24.10.2001
(51) Int. Cl.: B65G 59/02

(54) **Depalletizer**
Entpalettiervorrichtung
Dépalettiseur

(43) Date of publication of application: 07.05.2003
(73) Proprietor: TMG Impianti S.r.l., 35018 San Martino di Lupari (Padova) (IT)
(72) Inventor: Pivato, Angelo, 35015 Galliera Vita (Padova) (IT)
(74) Representative: Gotra, Stefano

(56) References cited:
- EP-A- 0 668 223
- DE-A- 2 223 782
- US-A- 3 534 872
- US-A- 3 717 264
- US-A- 3 869 049

## Description

Specifically, though not exclusively, the invention can be used for transferring a multi-stacked pallet having various layers of objects (for example, bottles) piled one on top of another or side-by side, and packed in separate packages. The invention is related to a pallet transfer unit which receives a multi-layered stack on a pallet and removes a layer or group of layers one by one and transfers them in succession to a zone situated away from the pallet transfer unit, at a predetermined height. The zone the pallets are transferred to usually comprises a conveyor belt which takes the objects towards further work stations.

EP 0668 223, corresponding to the preamble of claim 1, discloses a pallet transfer unit for a multi-layer stack comprising: a housing station for the multi-layer stack; a transport plane located by a side of the housing station and vertically mobile from at least one receiving position, in which the transport plane can singly receive at least one layer of the stack in the housing station, and at least one position in which the layer is transferred, in which at least one position the at least one layer can be transferred from the transfer plane to a conveyor which is external of the pallet transfer unit.

A main aim of the invention is to provide a pallet transfer unit which transfers each layer singly to the external zone efficiently, safely, quickly and without causing any damage to the layer of objects.

A further aim is to provide a pallet transfer unit which can deliver the layer of objects at an exact vertical height, at which it is collected by a further work station.

The pallet transfer unit of the invention also attains the object of being adaptable to various heights for delivering the layer: in particular, it can be selectively combined, simply and rapidly, to various types of further work station or device (for example conveyor belts) already present before installation of the pallet transfer unit and destined to be used in combination with the work station. The work station will receive the objects taken from the pallet, and could be at various different heights: so the invention is advantageously associated to a horizontal plane for taking the objects onwards to a further work operation, whatever the height of the horizontal plane.

A further advantage is that the invention ensures full transfer of the layer, as well as the continuity and regularity of the transfer.

A further advantage of the invention is that it provides a pallet transfer unit which is constructionally simple and economical.

A still further advantage of the invention is that it provides a pallet transfer unit which is not unwieldy or massive.

These aims and advantages and others besides are all achieved by the present invention, as it is defined by the claims that follow.

Further advantages of the present invention will better emerge from the detailed description that follows of a preferred but non-exclusive embodiment of the invention, illustrated purely by way of non-limiting example in the accompanying figures of the drawings, in which:
figure 1 is a vertical-elevation view of an embodiment of the pallet transfer unit of the invention;

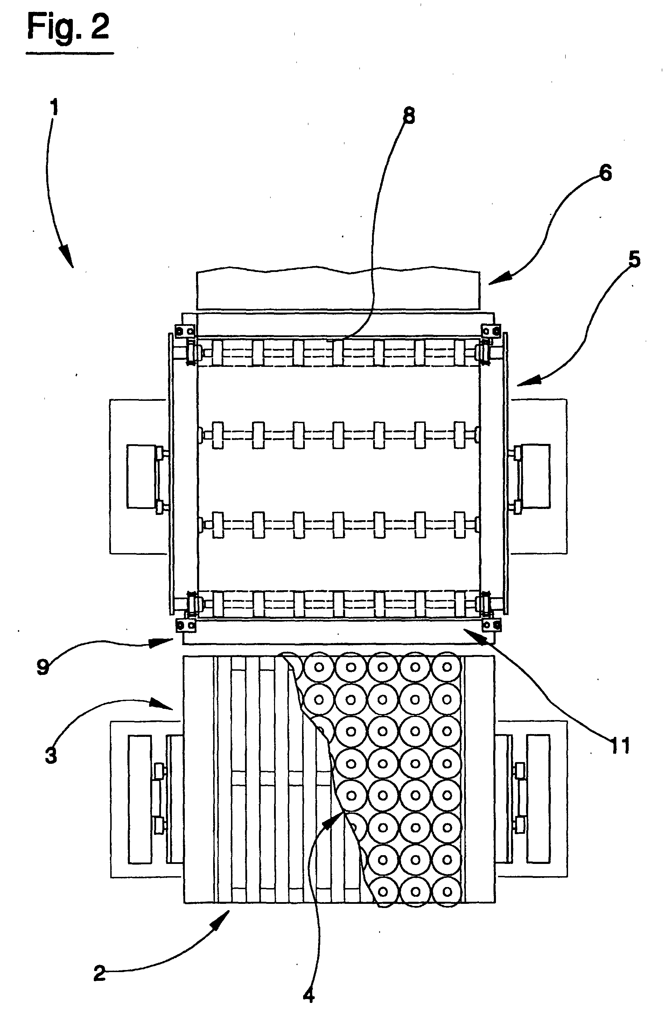

figure 2 is a plan view from above of figure 1;

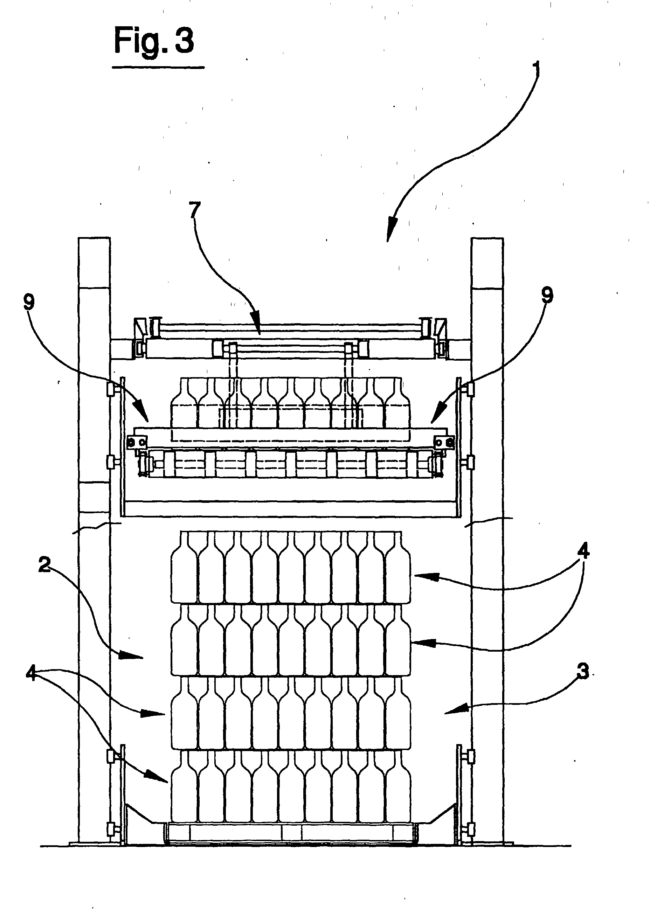

figure 3 is a view from the left of figure 1;
figure 4 is an enlarged detail of figure 1 in a different operative configuration;
figure 5 is a lateral view from the left of figure 4.

With reference to the above figures, 1 denotes in its entirety a pallet transfer unit of a multi-layered stack 2 of objects, which are to be transferred from a pallet.

The pallet transfer unit 1 comprises a temporary housing station 3 which can receive the stack 2. The station 3 is predisposed to receive the stack 2 which comprises the various layers 4 lying one on top of another, and which collectively is laid on a typical pallet.

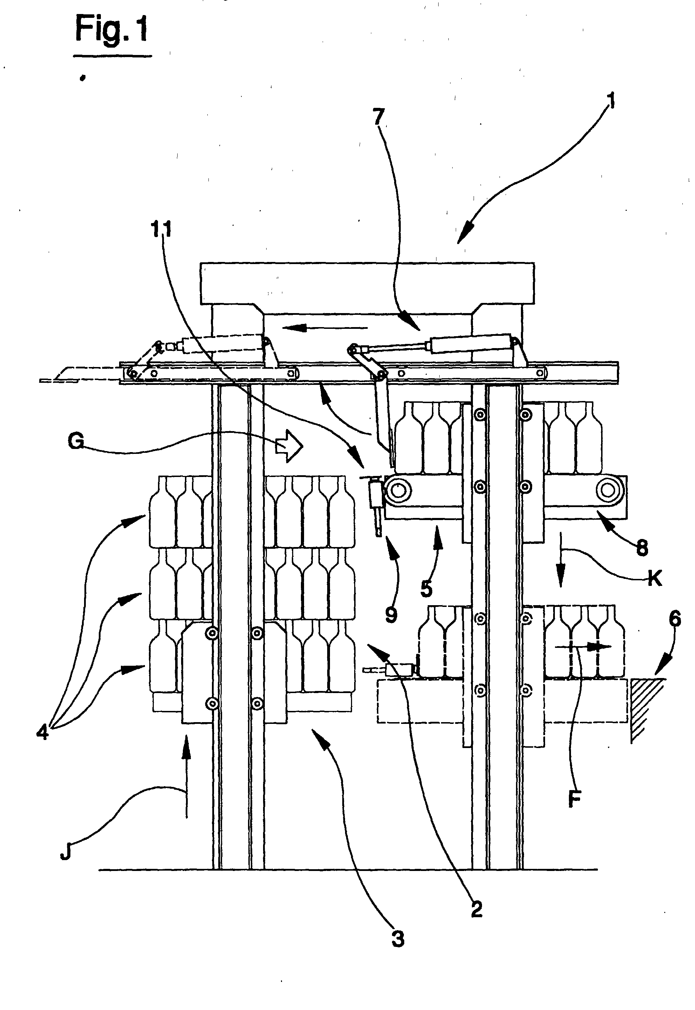

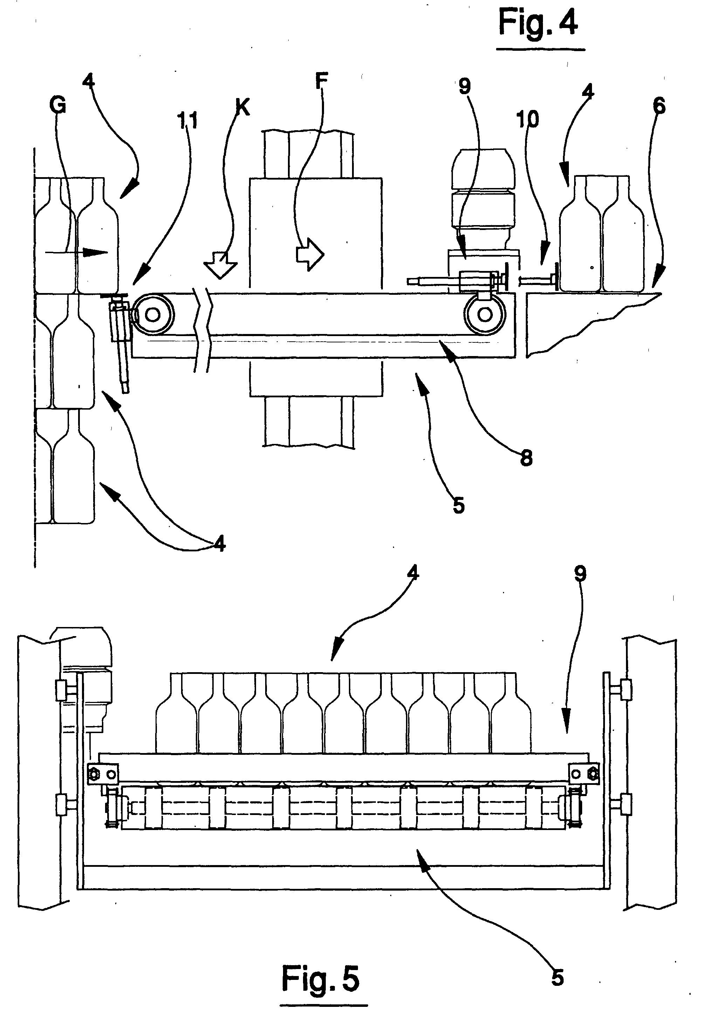

The transfer unit 1 comprises a transport plane 5 located by the housing station 3 and mobile on command vertically in direction K in both directions, between at least one upper position in which it receives at least one layer 4 (but possibly more than one) of objects (figure 1) in arrival from the stack 2 at the housing station 3, and at least one lower position in which it relinquishes the layer 4 (figure 4), in which the transport plane 5 can transfer the layer 4 towards an external zone where a conveyor is located. The external conveyor, which receives the layer 4 and distances it from the pallet transfer unit 1, is in the present embodiment a horizontal transport plane which conveys the layers 4 it receives one by one towards subsequent work stations.

The transport plane 5 of the transfer unit, at the point where transfer is made, is practically coplanar with the external conveyor. The vertically-mobile transport plane 5 can stop, on command, at a plurality of positions, according to the position of the external conveyor 6 it is delivering the objects to.

The transport plane is mobile on motorized commandable vertical guides connected to a central control unit, of known type and not illustrated.

The pallet transfer unit 1 is provided with means for transferring 7 predisposed to transfer the entire upper layer of the stack 2 horizontally, from the housing station 3 towards the transport plane 5 situated in the receiving position. In the described embodiment, the means for transferring 7 remove the layers 4 one by one from the top of the stack 2, supporting each layer 4 at least on two opposite sides, from a lifting position in which the layer 4 is situated at a predetermined height.

Known-type means for lifting are predisposed at the housing station 3 for lifting the stacks 2 by a predetermined quantity (equal to the height of one layer of a stack 2) in direction J, each time an upper layer 4 is transferred from the stack 2 to the mobile transport plane 5, so that the top of the stack 2 is constantly brought to the same level and the means for transferring 7 can grip each successive upper layer 4, transferring it to the transport plane 5.

The transport plane 5 is provided with means for translating which are solidly constrained to the plane 5 in its vertical movement and which are predisposed to translate the layer with a horizontal movement, or with a movement containing at least one horizontal component, towards the external conveyor 6. The means for translating preferably comprise at least one ring-wound mobile flexible organ, for example a chain conveyor (as in the illustrated embodiment) or a belt conveyor, having a horizontal upper branch, mobile in direction F, operatively associated with the layer 4 of the stack, for translating the layer 4 horizontally in direction F.

The Flexible organ 8, ring-wound on wheels, at least one of which is driven, is actuated by a motor mounted on the transport plane 5 and vertically mobile solidly with the transport plane 5. The flexible organ 8 can be provided with one or more externally-projecting pusher elements 9, destined, by effect of the ring-wound flexible organ 8, to interact contactingly with the back side of the layer 4 located on the transport plane 5, to nudge the layer 4 forward, which layer 4 drags or slides on a fixed sliding plane.

In the illustrated embodiment, the mobile flexible organ 8 solidly bears at least one final pusher element 10, predisposed to exert a final push on the layer 4 to make sure the layer 4 has been fully expelled from the transport plane 5, and completely received by the external conveyor 6. In the illustrated embodiment the functions of the pusher element 9 and the final pusher element 10 are incorporated in a single element, though equally possible would be embodiments in which the same functions are carried out by two structurally distinct elements, both applied on the flexible organ 8.

The final pusher element 10 provides a push which is added to the displacement action of the pusher element 9 in combination with the simple advancing ring-winding movement of the flexible organ 8. This final push is exerted when the layer 4 has already been drawn forward, by effect of the movement of the flexible organ 8, up until the edge of the flexible organ 8 has been reached and passed by the layer 4.

The final pusher element 10 can assume at least an initial configuration, in which it is retracted and behind the layer 4, close to an edge of the transport plane 5, and a total expulsion configuration, in which the element 10 is advanced and has already pushed the layer 4 beyond the edge of the transport plane 5. In the illustrated embodiment, the final pusher element 10 comprises a hydraulic axial actuator (for example a pneumatic cylinder).

The pusher element 9 and the final pusher element 10 together form a single pusher unit, able to perform two tasks: a main first push, in combination with the flexible organ 8 (this movement is connected to the fact that the pusher unit is fixed to the flexible organ 8 and that the push is commanded by the same motor that drives the flexible organ 8), and a final second push in which the final pusher element 10 passes from the first, retracted position, into the totally advanced position (which movement is commanded in the illustrated embodiment by hydraulic elements which are independent and different from the motor driving the flexible organ 8) which follows the first movement and which completes the task, guaranteeing the complete removal of the layer 4 from the pallet transfer unit 1 and completing the passage of the layer 4 onto the external conveyor 6. The means for actuating the final pushing movement are also borne on the mobile transport plane and are mobile solidly there-with. At least one flat connector element 11 is constrained to the flexible organ 8. The connector element 11 can assume a transfer position (see figure 1) in which it connects a receiving end of the transport plane 5 (in the receiving position) with the housing station 3 from which the topmost layer 4 of the stack is taken. The central control unit, which controls the pallet transfer unit 1, coordinates the various movements so that the flat connector element 11 is in the transfer position just before the layer 4 is actually transferred from the stack 2 towards the mobile transfer plane 5 and remains there at least for the whole transfer time, ensuring that the whole layer 4, especially the back edge of the layer 4 (where "back" refers to the transfer direction G) is stably positioned on the transport plane 5 and supported thereby.

The flat connector element 11, which in the illustrated embodiment is frontally borne by the pusher element 9, has the function of supporting the layer 4 during the transfer stage from the top of the stack 2 to the transport plane 5 when the latter is in the upper position (in this position the connector element 11 is below the lower side of the layer 4); it also has the task, during the layer 4 transfer stage, when the layer 6 is being transferred onto the external conveyor 6, of being the frontal part of the pusher element 9 (and also the final pusher element 10 when united to the pusher element 9), in direct contact with the back side of the layer 4.

During operation, the stack 2 of layers 4 transported on a pallet enters the pallet transfer unit 1 and is positioned in the housing station 3. From here the upper layer 4 of the stack 2 is removed by the means for transferring 7 and conveyed onto the mobile transfer plane 5 which is in the receiving position, in which it is practically coplanar to the base of the upper layer 4. During this stage the flat connector element 11, which in effect is a sort of prolongation of the transport plane 5 located at the entrance to the transport plane 5, ensures that the layer 4 is entirely and stably received onto the transport plane 5. The transport plane 5 is then moved vertically in the direction of the arrow K, until it is in the transfer position. The layer 4 is then transferred horizontally by effect of the movement of the flexible organ 8. During this stage the pusher element 9, drawn into movement by the flexible organ 8, pushes the layer 4 forwards (without at this point actuating the final pusher element 10 which stays in the retracted position), and then at the end of the operation makes a final push, for the sake of total transfer safety, with the axial actuator commanding the final pusher element 10 to move rapidly into the extended position, when close to the end of the upper branch of the flexible organ 8 from which the layer 4 will be transferred, i.e. just before the layer 4 is left on the external conveyor 6. Then the transport plane 5 returns into the upper position, ready to receive a fresh layer 4, while the stack 2 in the housing station 3 is raised in direction J so as to be ready to make a fresh layer 4 ready for gripping by the means for transferring, in a new work cycle.

In further embodiments, not illustrated, means for transferring could be used which are vertically mobile, so that they can be associated during operation without raising the stack 2. In this case the transfer can be done practically in a horizontal direction, so that the transport plane 5 is commanded, each time it receives a layer, to stop at a level corresponding to a topmost layer on the stack. Thus the transport plane 5 can stop, during its vertical movement, in a plurality of positions for receiving the layer.

## Claims

1. A pallet transfer unit for a multi-layer stack (2) comprising:
a housing station (3) for the multi-layer stack (2); a transport plane (5) located by a side of the housing station (3) and vertically mobile from at least one receiving position, in which the transport plane (5) can singly receive at least one layer (4) of the stack (2) in the housing station (3), and at least one position in which the layer (4) is transferred, in which at least one position the transfer plane (5) can transfer the at least one layer (4) to a conveyor (6) which is external of the pallet transfer unit; means (7) for transferring the at least one layer (4) from the stack (2) from the housing station (3) towards the transport plane (5) situated in the at least one receiving position, **which**
means for transferring (7) are predisposed horizontally to transfer one or more of the layer (4) which is topmost in the stack (2) to the transport lane (5) in the receiving position; **characterised in that** the unit also comprises separate shifting means on the transport plane (5)
usable for transferring the layer (4) horizontally (F), or in at least one horizontal direction, towards the external conveyor (6).

2. The pallet transfer unit of claim 1, **characterised in that** the shifting means are actuated by a motor which is solidly constrained to the transport plane (5) in the vertical movement thereof.

3. The pallet transfer unit of any one of the preceding claims, **characterised in that** the shifting means comprise a ring-wound mobile flexible organ (8).

4. The pallet transfer unit of claim 3, **characterised in that** the flexible organ (8) bears at least one final pusher element (10) which is predisposed to push the layer (4) out of the transport plane (5) and which can assume at least one retracted configuration, in which it is located behind the layer (4) to be removed from the transport plane (5), and at least one extended position, on reaching which it has pushed the layer (4) completely out of the transport plane (5).

5. The pallet transfer unit of claim 3 or 4, **characterised in that** the flexible organ (8) bears at least one flat connector element (11) able to assume a position in which it connects a receiving end of the transport plane (5) with the housing station (3) from which the layer (4) is taken.

6. The pallet transfer unit of claim 5, **characterised in that** it comprises a central control unit controlling a positioning of the flat connector element (11) when the element (11) is brought into position for a transfer of the layer (4) from the housing station (3) to the transport plane (5).

7. The pallet transfer unit of claim 5 or 6, **characterised in that** the flat connector element (11) is borne frontally by the final pusher element (10).

## Patentansprüche

1. Palettenförderer für einen mehrschichtigen Stapel (2) , umfassend:
eine Lagerungsstation (3) für den mehrschichtigen Stapel (2), eine Beförderungsebene (5), die sich an einer Seite der Lagerungsstation (3) befindet und senkrecht mindestens von einer Aufnahmeposition beweglich ist, in der die Beförderungsebene (5) mindestens eine Lage (4) des Stapels (2) in der Lagerungsstation (3) einzeln aufnehmen kann, und mindestens eine Position, in die die Lage (4) befördert wird, in dieser mindestens einen Position kann die Beförderungsebene (5) mindestens eine Lage (4) zu einem Förderer (6) befördern, der sich außerhalb des Palettenförderers befindet; Mittel (7) für die Beförderung mindestens einer Lage (4) des Stapels (2) von der Lagerungsstation (3) zur Beförderungsebene (5), die sich in mindestens einer Aufnahmeposition befindet, deren Beförderungsmittel (7) waagrecht angeordnet sind, um eine oder mehrere Lagen (4) von der Spitze des Stapels zur Beförderungsebene (5) in die Aufnahmeposition zu bringen, **dadurch gekennzeichnet, dass** die Einheit auch gesonderte Mitnahmemittel auf der Beförderungsebene (5) umfasst, die dazu dienen, die Lage (4) waagrecht (F) oder in mindestens einer waagrechten Richtung zum außen liegenden Förderer (6) zu befördern.

2. Palettenförderer nach Anspruch 1, **dadurch gekennzeichnet, dass** die Mitnahmemittel durch einen Motor betrieben werden, der fest mit der Beförderungsebene (5) in der senkrechten Richtung verbunden ist.

3. Palettenförderer nach einem der vorhergehenden Ansprüche, **dadurch gekennzeichnet, dass** die Mitnahmemittel ein ringförmiges, flexibles, bewegliches Organ (8) umfassen.

4. Palettenförderer nach Anspruch 3, **dadurch gekennzeichnet, dass** das flexible Organ (8) über mindestens ein abschließendes Schubelement (10) verfügt, das geeignet ist, die Lage (4) aus der Beförderungsebene (5) zu schieben, und das mindestens eine zurück versetzte Position einnehmen kann, in der es sich hinter der von der Beförderungsebene (5) zu entfernenden Lage (4) befindet, und mindestens eine weiter nach vorne versetzte Position, bei deren Erreichen es die Lage (4) vollständig aus der Beförderungsebene hinaus befördert hat.

5. Palettenförderer nach Anspruch 3 oder 4, **dadurch gekennzeichnet, dass** das flexible Organ (8) mindestens ein flaches Anschlusselement (11) besitzt, das eine Position einnehmen kann, in der es eine Aufnahmeseite der Beförderungsebene (5) mit der Lagerungsstation (3) verbindet, von der die Lage (4) entnommen wird.

6. Palettenförderer nach Anspruch 5, **dadurch gekennzeichnet, dass** sie eine zentrale Steuereinheit besitzt, die eine Positionierung des flachen Anschlusselements (11) überwacht, wenn das Element (11) in Position gebracht wird für die Beförderung der Lage (4) von der Lagerungsstation (3) zur Beförderungsebene (5).

7. Palettenförderer nach Anspruch 5 oder 6, **dadurch gekennzeichnet, dass** das flache Anschlusselement (11) auf der Frontseite des abschließenden Schubelements (10) angebracht ist.

## Revendications

1. Unité de transfert de palettes pour une pile multicouches (2) comprenant : une station de logement (3) pour la pile multicouches (2) ; un plan de transport (5), placé sur le côté de la station de logement (3) et se déplaçant de manière verticale entre au moins une position de réception, dans laquelle le plan de transport (5) peut recevoir singulièrement au moins une couche (4) provenant de la pile (2) dans la station de logement (3) et au moins une position dans laquelle la couche (4) est transportée et de laquelle le plan de transport (5) peut transporter au moins une couche (4) vers un convoyeur (6) qui est externe par rapport à l'unité de transfert de palettes ; moyens (7) permettant de transporter au moins une couche (4) de la pile (2) à partir de la station de logement (3) vers le plan de transport (5) situé dans au moins une position de réception, lesdits moyens de transport (7) étant placés de manière horizontale afin de transporter une ou plusieurs couches (4) se trouvant dans la partie supérieure de la pile (2) vers le plan de transport (5) dans la position de réception, **caractérisés en ce que** l'unité comprend également des moyens d'entraînement séparés sur le plan de transport (5) pouvant être utilisés pour transporter la couche (4) de manière horizontale (F) ou dans au moins une direction horizontale vers le convoyeur externe (6) .

2. Unité de transfert de palettes selon la revendication 1, **caractérisée en ce que** les moyens d'entraînement sont actionnés par un moteur qui est solidaire par rapport au plan de transport (5) dans son mouvement vertical.

3. Unité de transfert de palettes, selon l'une quelconque des revendications précédentes, **caractérisée en ce que** les moyens d'entraînement (5) comprennent un organe mobile à anneau sans fin(8).

4. Unité de transfert de palettes selon la revendication 3, **caractérisée en ce que** l'organe mobile (8) porte au moins un élément de poussée finale (10) qui est prévu pour pousser la couche (4) hors du plan de transport (5) et qui est susceptible de présenter au moins une configuration en retrait, dans laquelle il se trouve placé derrière la couche (4) pour être expulsé du plan de transport (5) et au moins une configuration avancée, dans laquelle il a déjà complètement poussé la couche (4) au-delà dudit plan de transport (5).

5. Unité de transfert de palettes selon la revendication 3 ou 4, **caractérisée en ce que** l'organe mobile (8) porte au moins un élément de raccord plat (11) qui est en mesure d'adopter une position de raccord, dans laquelle il relie une extrémité de réception du plan de transport (5) avec la station de logement (3) à partir de laquelle la couche (4) est prélevée.

6. Unité de transfert de palettes selon la revendication 5, **caractérisée en ce qu'**elle comprend une unité centrale de commande qui contrôle la mise en place de l'élément de raccord plat (11) quand l'élément (11) est mis en place pour procéder à un transport de la couche (4) de la station de logement (3) vers le plan de transport (5).

7. Unité de transfert de palettes selon la revendication 5 ou 6, **caractérisée en ce que** l'élément de raccord plat (11) est amené dans une position frontale par rapport à l'élément de poussée finale (10).
